Europäisches Patentamt

European Patent Office

Office européen des brevets

(19)

(11) **EP 1 227 441 A1**

## (12) DEMANDE DE BREVET EUROPEEN

(43) Date de publication:
**31.07.2002 Bulletin 2002/31**

(51) Int Cl.$^7$: **G06T 7/20**

(21) Numéro de dépôt: **02075217.6**

(22) Date de dépôt: **18.01.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.01.2001 FR 0100883**

(71) Demandeur: **Koninklijke Philips Electronics N.V.**
**5621 BA Eindhoven (NL)**

(72) Inventeur: **Allouche, Cyril**
**75008 Paris (FR)**

(74) Mandataire: **Chaffraix, Jean**
**Société Civile S.P.I.D.**
**156, Boulevard Haussmann**
**75008 Paris (FR)**

(54) **Suivi de la déformation d'une structure linéique définie sur une image d'une séquence d'images d'un organe déformable dans le temps**

(57) L'invention concerne un procédé de traitement d'image appartenant à une séquence d'au moins deux images IM(t1), IM(t2) présentant une surface représentative d'un organe ou d'une partie d'organe déformable dans le temps et appelée surface d'organe, ladite surface incluant des points caractéristiques, notés points de marquage MP, qui se correspondent d'une image à l'autre de la séquence. Le procédé inclut une étape DEF de définition sur une image, IM($t_1$), d'une structure linéique dont la déformation doit être suivie, LS($t_1$), une étape CALC de calcul des positions des points de marquage MP(t1) et MP(t2), une étape DET de détermination des paramètres d'une expression mathématique explicite f(t1/t2) de la déformation de l'organe observée entre les deux images. Ladite détermination est réalisée à partir des positions d'un ensemble MP' de points de marquage sur les deux images. L'expression f(t1/t2) est ensuite appliquée dans une étape AP à la structure linéique LS(t1) pour définir la forme de la structure linéique LS(t2) après déformation de l'organe entre les deux images.

Application : Images marquées par modulation spatiale de résonance magnétique.

FIG.1

EP 1 227 441 A1

**Description**

L'invention concerne un procédé de traitement d'images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence. L'invention concerne aussi un appareillage de traitement d'images pour mettre en oeuvre le procédé décrit ci-dessus.
L'invention trouve son application dans le domaine du traitement d'images médicales. Le procédé est en particulier applicable sur les images d'organe marqué par modulation spatiale de résonance magnétique. Ce marquage est visible sur les images sous la forme de lignes de marquage ayant des points d'intersection. Les lignes de marquage se déforment en suivant la déformation de l'organe. Lesdits points d'intersection sont alors choisis comme points de marquage car les correspondances de ces points d'une image à l'autre sont aisément détectables.

Un procédé de traitement d'images d'organe marqué par modulation magnétique en vue de quantifier la déformation de l'organe est déjà connu de l'état de la technique par la publication de Matthias Stuber et al. intitulée "Quantification of the local heartwall motion by magnetic resonance myocardial tagging". Dans ce document, les points d'intersection entre les lignes de marquage sont déterminés par des algorithmes d'approximation basés sur un calcul de potentiel (en anglais, « snakes »). Par ailleurs, ce procédé met en oeuvre une moyenne des angles par rapport au centre de gravité pour quantifier la rotation et la contraction.

Ce procédé présente des inconvénients. D'abord, l'utilisation des algorithmes d'approximation basés sur un calcul de potentiel pour la détermination des points d'intersection entre les lignes de marquage manque de précision. Ensuite, la mise en oeuvre de la moyenne des angles par rapport au centre de gravité pour quantifier la rotation et la contraction résulte aussi en un résultat imprécis et mathématiquement incorrect. Par conséquent, des extrapolations ultérieures ne sont pas fiables pour les points autres que les points de marquage. Or, ces extrapolations sont nécessaires lorsque l'on souhaite suivre le mouvement d'une structure linéique particulière qui est définie sur une image et qui est amenée à se déformer avec l'organe dans la séquence d'images.

Un but de l'invention est de fournir un procédé pour étudier la déformation d'un organe à partir des données de l'image sur une structure linéique définie sur une image de la séquence. Un but particulier de l'invention est de fournir un procédé pour suivre, avec fiabilité, la déformation d'une telle structure linéique définie sur une image. Le suivi d'une structure linéique est en particulier intéressant pour étudier le mouvement des parois de l'organe qui apparaissent sur l'image sous la forme d'un contour. L'invention s'applique particulièrement au coeur qui présente deux parois majeures visibles sur les images, par exemple obtenues par résonance magnétique : l'endocarde et l'épicarde. Selon l'invention, les buts cités sont atteints, et les problèmes présentés par l'état de la technique sont résolus, par un procédé conforme au paragraphe introductif et caractérisé en ce qu'il comprend des étapes de:

définition d'une structure linéique sur une des images de la séquence,
calcul des positions des points de marquage sur au moins deux images, successives ou non,
détermination des paramètres d'une expression mathématique explicite de la déformation de l'organe ou de la partie de l'organe observée entre les deux images, à partir des positions d'un ensemble de points de marquage sur les deux images et des positions des points de la structure linéique,
application de ladite expression mathématique explicite à la structure linéique pour définir la forme de la structure linéique après déformation de l'organe entre les deux images. Le procédé selon l'invention présente de nombreux avantages parmi lesquels les avantages de la régularisation par une expression mathématique explicite pour quantifier la déformation. Cette régularisation remplace l'approche par interpolation du mouvement en chaque point qui est le procédé choisi dans le document de l'état de la technique cité. L'expression mathématique obtenue est alors au moins valable en tout point de la structure linéique définie lors de la première étape. Cette approche estime un mouvement au sens très rigoureux des moindres carrés avec une régularisation mathématique explicite. Cette régularisation corrige le bruit.

Dans une mise en oeuvre avantageuse de l'invention, la structure linéique réalise une segmentation de l'image, ladite segmentation étant ainsi suivie d'une image à l'autre. La structure linéique définit plusieurs zones dans l'image et les calculs de la déformation de l'organe peuvent alors être réalisés uniquement sur une zone d'intérêt particulier. Par exemple, dans le cas du coeur, la définition de deux structures linéiques suivant respectivement l'endocarde et l'épicarde permettent de ne réaliser les calculs que sur la surface de l'image réellement représentative de l'organe. Cela diminue les temps de calcul et fiabilise le résultat car les mouvements "parasites" des structures n'appartenant pas à l'organe ne sont pas pris en compte.

Dans un premier mode de réalisation de l'invention, l'expression mathématique de la déformation de l'organe ou de la partie de l'organe observée entre les deux images est déterminée pour une surface incluant la structure linéique à partir des positions sur les deux images d'un ensemble de points de marquage qui contient au moins les points de marquage présents sur ladite surface. La structure linéique peut être incluse strictement dans la surface ou être le contour de cette surface.

Dans un second mode de réalisation, l'expression mathématique de la déformation de l'organe ou de la partie de l'organe observée entre les deux images est déterminée uniquement pour les points de la structure linéique à partir des positions sur les deux images d'un ensemble de points de marquage qui sont pondérés en fonction de leur éloignement par rapport à la structure linéique. Les poids attribués aux points de marquage sont d'autant plus importants que le point est proche de la structure linéique. Ces poids, utilisés dans une approximation aux moindres carrés, permettent d'obtenir une expression mathématique très fiable pour les points de la structure linéique où elle est définie.

L'invention sera mieux comprise à la lumière de la description suivante de quelques modes de réalisation, faite à titre d'exemples et en regard des dessins annexés, dans lesquels :

- la figure 1 représente un diagramme d'un procédé de traitement d'images selon l'invention,
- la figure 2 présente une image CSPAMM d'un coeur, ladite image appartenant à une séquence d'images et étant prise après l'impulsion de magnétisation,
- la figure 3 illustre un premier réalisation de l'invention,
- la figure 4 illustre un second mode de réalisation de l'invention,
- la figure 5 représente un appareillage de traitement d'images selon une mise en oeuvre particulière de l'invention,
- les figures 6a, 6b, 6c et 6d représentent la déformation d'une structure linéique respectivement sans correction du mouvement global, avec correction de translation globale, avec correction de translation et de rotation globales, avec correction de translation, de rotation et de contraction globales,
- la figure 7 représente un appareil de saisie et de traitement d'images selon l'invention.

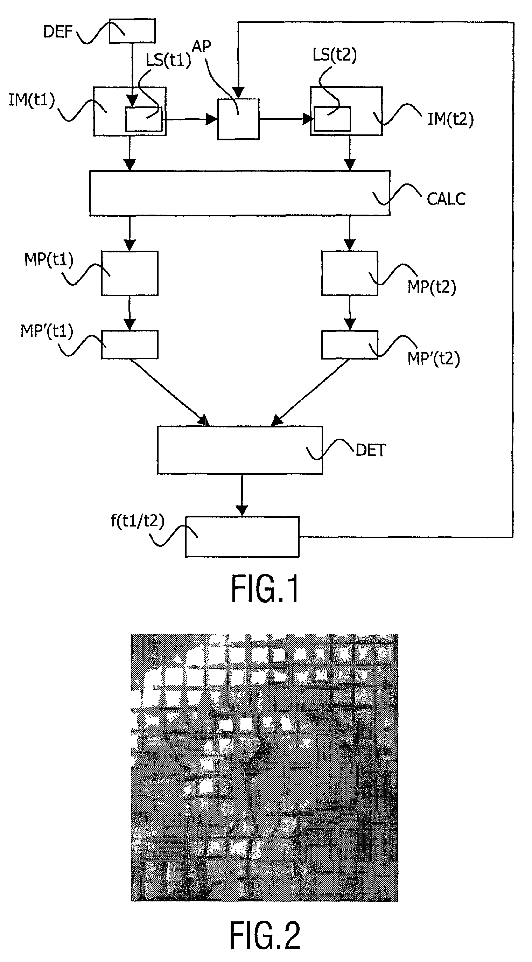

La figure 1 représente un diagramme d'un procédé de traitement d'images selon l'invention. Ledit procédé est applicable sur des images appartenant à une séquence d'images d'au moins deux images IM(t1) et IM(t2) prises à deux instants t1 et t2 d'un organe ou d'une partie d'un organe amené à se déformer dans le temps. Ledit organe ou ladite partie de l'organe est visible sur les images sous la forme d'une surface appelée surface de l'organe. La surface de l'organe Inclut des points caractéristiques dont les correspondances sont déterminées d'une image à une autre de la séquence. Lesdits points caractéristiques sont notés points de marquage. L'organe ou la partie d'organe peut, par exemple, être marqué par modulation spatiale de résonance magnétique. Dans la suite, l'invention est décrite plus particulièrement dans le cas de ce marquage par modulation spatiale de résonance magnétique.

La technique de marquage par modulation spatiale de résonance magnétique inclut en particulier les techniques SPAMM et CSPAMM permettant d'obtenir des images où le marquage est visible sur les images suivant des lignes de marquage qui peuvent être de différentes géométries lorsqu'elles sont générées dans l'organe (droites, courbes...). Lesdites lignes de marquage se déforment en suivant la déformation matérielle de l'organe. Sur les images obtenues grâce aux techniques évoquées ci-dessus, les lignes correspondant aux minima de magnétisation spatiale sont des lignes sombres et sont aisément repérables.

La modulation spatiale de résonance magnétique est en général utilisée en prenant des séries d'images de l'organe marqué à des temps successifs et réguliers. Ces séries d'images sont dénommées séquences d'images et la déformation de l'organe est observée grâce à la déformation des lignes de marquage qui constituent une sorte de trame attachée à l'organe. Ladite trame peut avoir divers aspects : droites parallèles, grille constituée de droites suivant deux directions... Une technique dénommée "Slice-Following" permet de suivre la déformation d'une section de l'organe même si le plan de cette section se déplace dans une direction substantiellement perpendiculaire à ce plan pendant la séquence.

Dans le cas d'une déformation périodique de l'organe, plusieurs séquences d'images du même organe prises pour des déformations similaires successives montrent la même déformation sur chaque Image similaire, c'est-à-dire, échantillonnée au même instant au sein de la période de déformation. Dans ce cas, les images similaires peuvent être combinées de manière à ce que les trames des deux images soient visibles sur la nouvelle image résultant de la combinaison. On définit ainsi une nouvelle séquence d'images en effectuant cette combinaison sur l'ensemble des images de la séquence. Cette nouvelle séquence contient en général plus d'information que les séquences d'origine plus simples.

En fonction des temps d'acquisition des séquences qui dépendent du marquage choisi, il peut être avantageux, soit de travailler sur une seule séquence d'images de l'organe marqué avec un marquage complexe, soit de travailler sur une combinaison de plusieurs séquences d'images (généralement deux) de l'organe chaque fois marqué avec un marquage simple, ladite combinaison définissant une nouvelle séquence utilisée ensuite dans le procédé de traitement d'images selon l'invention.

La figure 2 présente une image d'un coeur, ladite image appartenant à une séquence d'images et étant prise environ 9 ms après l'impulsion de magnétisation. Deux ensembles de lignes parallèles correspondant à des minima d'intensité lumineuse sont observés, les lignes parallèles d'un ensemble étant perpendiculaire aux lignes parallèles de l'autre ensemble. La séquence d'images dont est tirée cet exemple présente ainsi des lignes de marquage suivant deux directions distinctes et peut, ainsi, être le résultat, soit d'une saisie directe d'une séquence d'images de l'organe marqué suivant les deux directions, soit de la combinaison de deux saisies de séquences, chacune des deux séquences étant marquées suivant une des deux directions.

Deux types de lignes de marquage peuvent être utilisées dans un procédé suivant l'invention. Sur la figure 2, les lignes de marquage correspondant à des minima d'intensité, c'est-à-dire à des minima de résonance magnétique sont facilement repérables. Les lignes de marquage correspondant à des maxima d'intensité et correspondant à des maxima de résonance magnétique sont cependant également détectables, même si leur détection est moins aisée. Par exemple, par dérivation du profil d'intensité de l'image il est possible de localiser les lignes correspondant aux maxima de magnétisation. L'utilisation de ces deux types de lignes de marquage augmente l'information sur limage car la trame du marquage est plus serrée : le nombre de points d'intersection entre lignes de marquage et donc le nombre de points de marquage est plus important.

A propos de la qualité des prises d'images d'une séquence, la technique CSPAMM permet notamment d'obtenir un contraste persistant sur une séquence. Cela est en particulier utile dans le cas où les lignes de marquage correspondant aux maxima de résonance magnétique sont utilisées, le contraste persistant aidant au repérage des minimums d'intensité.

Le procédé de traitement d'images suivant l'invention traite les images où sont présents des points de marquage pour lesquels il est possible d'établir des correspondances d'une image à l'autre. Dans le cas de la modulation spatiale de résonance magnétique, les lignes de marquage sont telles qu'il existe des points d'intersection entre plusieurs lignes de marquage. Il est aisé d'établir des correspondances d'une image à l'autre pour ces points d'intersection qui sont nommés par la suite points de marquage MP. Ils peuvent être des points d'intersection entre lignes de marquage de toute forme et peuvent être directement visibles sur la trame de marquage ou n'être visible qu'après une combinaison de plusieurs séquences, donnant une nouvelle séquence d'images.

Le procédé selon l'invention inclut une étape DEF de définition sur une image $IM(t_1)$ d'une structure linéique $LS(t_1)$. Dans l'application du procédé dans un appareillage de traitement d'images suivant l'invention, cette étape peut par exemple être réalisée manuellement par l'utilisateur ou automatiquement sur une image quelconque de la séquence. Cette image IM(t1) peut être choisie à n'importe quel instant t1 de la séquence car les déformations observée d'une image à l'autre peuvent être, une fois déterminées, appliquées indifféremment dans le sens chronologique ou dans le sens contraire par simple inversion des déformations. Dans le cas où la structure linéique permet de suivre la déformation d'une paroi de l'organe observé, l'image sera avantageusement choisie comme étant celle où ladite paroi est la plus visible : le praticien peut dans ce cas, définir la structure linéique en suivant simplement visuellement le contour sur l'image.

Le procédé selon l'invention inclut une étape de calcul CALC des positions des points de marquage. Cela peut, dans l'exemple de la modulation spatiale de résonance magnétique, être réalisé par utilisation du procédé décrit dans la demande de brevet incluse par référence PHF000116. Dans cette demande de brevet des points candidats pour appartenir à une ligne de marquage donnée sont détectés avant que des moyens de prévision du mouvement de la ligne de marquage soient utilisés pour identifier la ligne de marquage et les points lui appartenant et qu'une équation de la ligne ne soit calculée. Une fois les équations des lignes de marquage déterminées, le calcul des positions des points de marquage est aisé. Les points de marquage MP(t1) et MP(t2) sont les points pour lesquels une correspondance est établie d'une image IM(t1) à l'image IM(t2), les deux instants t1 et t2 pouvant être ou non successifs dans la séquence d'images et t1 pouvant être postérieur ou antérieur à t2.

Le procédé selon l'invention inclut ensuite une étape de détermination DET d'une expression mathématique f de la déformation de l'organe ou de la partie de l'organe observée entre limage IM(t1) et IM(t2) à partir d'un ensemble MP' de points de marquage.

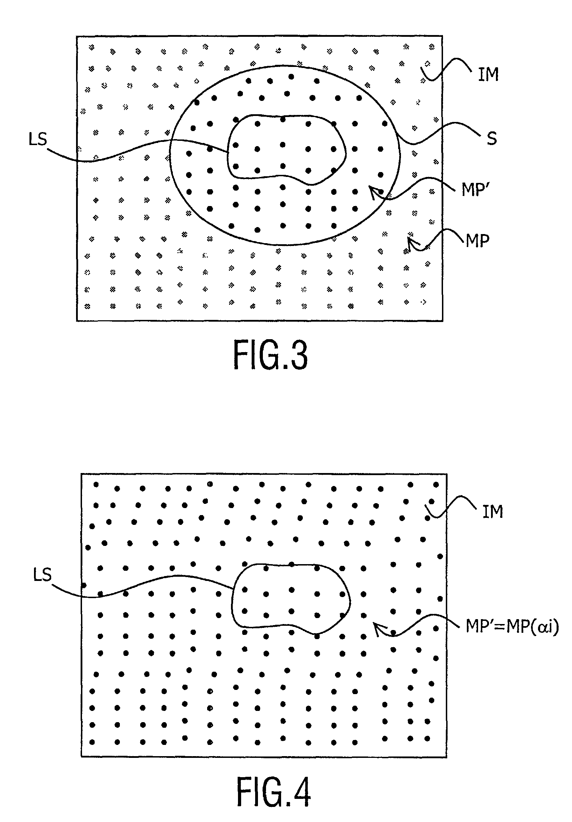

Un premier mode de réalisation de l'étape de détermination DET est illustrée sur la figure 3. La figure 3 représente une image IM sur laquelle les positions des points de marquage MP sont calculés. L'expression mathématique f de la déformation de l'organe ou de la partie de l'organe observée entre cette image et une seconde image est déterminée pour tous points d'une surface S incluant la structure linéique LS à partir des positions sur les deux images d'un ensemble de points de marquage MP', ledit ensemble de points de marquage MP' étant, dans cet exemple, l'ensemble des points de marquage présents sur ladite surface S. La structure LS étant incluse dans la surface S, la déformation de la structure linéique LS de cette image à la seconde est obtenue en appliquant l'expression mathématique f à LS. Dans ce premier mode de réalisation, l'expression mathématique est déterminée sur toute la surface S.

Un deuxième mode de réalisation, plus précis, de l'étape de détermination DET est illustrée sur la figure 4. La figure 4 représente une image IM sur laquelle les postions des points de marquage MP sont calculés. L'expression mathématique de la déformation f de l'organe ou de la partie de l'organe observée entre les deux images est déterminée uniquement pour les points de la structure linéique LS à partir des positions sur les deux images d'un ensemble de points de marquage MP', lesdits points de marquage MP' étant une partie des points de marquage MP ou la totalité de ces points de marquage MP pondérés en fonction de leur éloignement par rapport à la structure linéique LS. Le

poids $\alpha_i$ attribué à un point i appartenant à l'ensemble des points de marquage MP' est d'autant plus important que le point de marquage est proche de la structure linéique LS. Par exemple le poids $\alpha_i$ peut être de la forme :

$$\alpha_i = \frac{1}{\left(dis\,tan\,ce(\,po\,int\,i;LS\,)\right)^2} \; .$$

Les paramètres de l'expression mathématique f sont généralement déterminés par approximation aux moindres carrés, en utilisant ou non une pondération des poids selon le mode de réalisation. Dans le cas de points pondérés, l'approximation au moindres carrés revient à chercher la fonction f réalisant :

$$Inf\left(\sum_{MP'}\alpha_i\left(f\left(po\,int\,i\,(t1)\right)-po\,int\,i\,(t2)\right)^2\right).$$

Cette approximation est réalisée à partir des positions des points de marquage dont les positions sont connues sur les deux images et donc, dont le déplacement est connu entre t1 et t2, en se référant à nouveau à la figure 1. En utilisant une pondération des points de marquage MP', la régularisation sera ainsi meilleure au voisinage de la structure linéique. L'expression mathématique peut, par exemple, être une similitude qui rend compte des déformations rigides. Dans un mode de réalisation particulier, l'expression mathématique de la déformation est définie dans le plan complexe. La déformation peut être définie dans un repère polaire. Dans le cas particulier où l'organe est un coeur, il est aisé de définir un centre positionné approximativement au centre de gravité de la surface de l'organe telle que vue sur l'image. Dans le mode de réalisation préféré de l'invention, l'expression mathématique est dérivée d'une similitude que l'on peut écrire sous une forme relative à un point o choisi de manière quelconque, mais généralement choisi comme étant approximativement le barycentre de la surface observée :

$$f(z) = |z-o|(ae^{i\theta})+ d, \; \theta = arg(z-o).$$

L'expression de la similitude est modifiée en introduisant une série de Fourier dans l'expression pour rendre compte de déformations plus élastiques qu'une simple similitude :

$$f(z)=|z-o|\underbrace{\left(\sum_{\substack{k=-N \\ k\neq 0}}^{N}a_k e^{ik\theta}\right)}_{f_o(\theta)}+d \quad, \quad \theta=arg(z-o), \quad (a_k)\in C^{2N+1}$$

Cette expression rend compte d'une déformation semi-élastique globale dans un repère centré. Elle est définie par 2x(2N+1)+2 paramètres réels qui sont définis à partir des points de marquage de l'ensemble MP'. Ces paramètres sont en général surévalués car il y a plus de points de marquage dans MP' que de paramètres. C'est en particulier le cas lorsque les lignes de marquage correspondant aux maxima de résonance magnétique sont utilisées, le nombre de points d'intersection entre les lignes étant alors important. La surévaluation des paramètres permet de lisser le bruit. Dans le cas du coeur, l'endocarde est notablement plus contractile que l'épicarde et par conséquent, plus on approche du centre du myocarde, plus l'amplitude du mouvement radial est importante. Un terme correctif fonction du rayon et l'angle polaire est avantageusement ajouté a posteriori à la détermination de l'expression mathématique explicite f pour ajouter une dépendance en rayon. Ce terme correctif est lui aussi déterminé en utilisant les positions des points de marquage MP' sur les deux images mais cette détermination est réalisée après la détermination des paramètres $a_k$ de la déformation f(z).
Dans une mise en oeuvre avantageuse, le terme correctif est défini par secteurs angulaires s de l'image et est de la forme :

$$\gamma(r,\theta) = \sum_s \left( \gamma_s(r) \frac{\prod_{k\neq s}(\theta-\theta_k)}{\prod_{k\neq s}(\theta_s-\theta_k)} \right) .$$

Le terme $\gamma_s$(r) est un polynôme en r indépendant de $\theta$ défini sur le secteur angulaire s de l'image en fonction des positions des points de marquage sur le secteur angulaire s sur les deux images. L'interpolateur polynomial de Lagrange est ensuite utilisé pour tenir compte de la dépendance en $\theta$, $\theta_s$ étant l'angle central du secteur angulaire s. Si le terme correctif était déterminé en même temps que la fonction f il existerait une multiplicité d'écriture de l'ensemble sauf si la fonction f était contrainte. Or f donne une expression mathématique de la déformation globale. Le terme correctif représente le comportement physiologique et non pas la déformation cinématique. Globalement, l'élasticité de l'expression mathématique est contrôlée par le choix de N, ordre de Fourier (N=3 est généralement suffisant) et, dans le cas où un terme correctif est introduit, par le nombre de secteurs angulaires considérés pour l'approche du terme correctif et le choix du degré du polynôme $\gamma_s$.

Dans le second mode de réalisation de l'étape de détermination, il est possible d'avoir une détermination très précise de la déformation en appliquant dans un premier temps une étape de détermination d'une expression mathématique suivant le premier mode de réalisation, c'est-à-dire sur une surface, en utilisant un terme correctif. Ce terme correctif, une fois déterminé, est ensuite utilisé dans l'étape de détermination de l'expression mathématique déterminée uniquement sur la structure linéique. Les deux modes de réalisation peuvent ainsi être mis en oeuvre indépendamment ou être combinés pour obtenir des données complémentaires ou une meilleure précision.

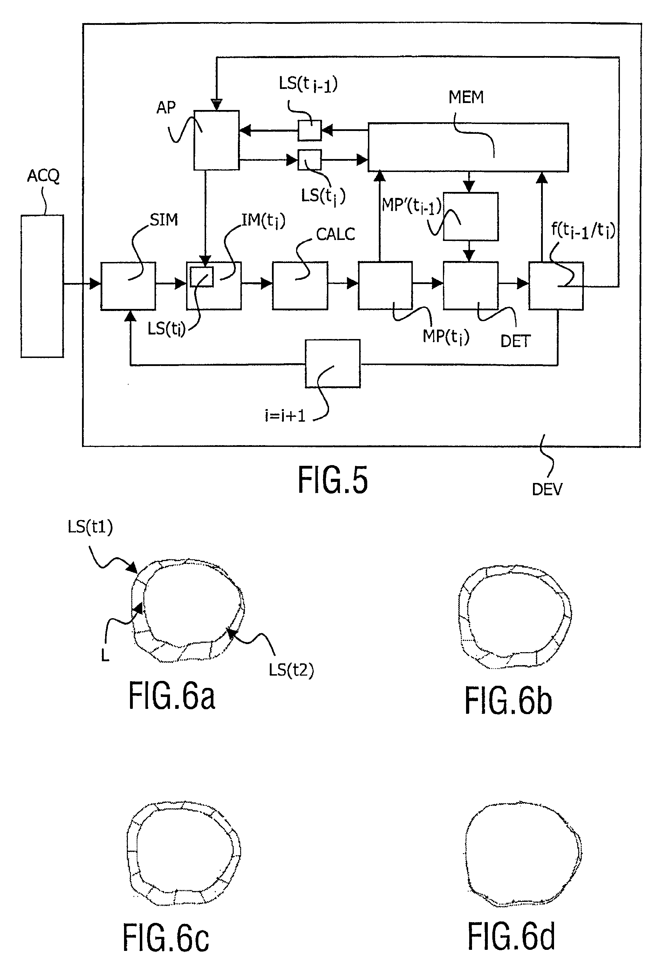

La figure 5 représente un appareillage DEV de traitement d'images selon une mise en oeuvre particulière de l'invention. Cet appareillage DEV est en relation avec des moyens d'acquisition ACQ de séquences SIM de X images. Cet appareillage DEV inclut des moyens DEF de définition d'une structure linéique LS($t_j$) sur une image IM($t_j$). Cet appareillage DEV inclut des moyens de calcul CALC des positions des points de marquage sur deux images successives ou non, et des moyens de détermination DET des paramètres d'une expression mathématique explicite de la déformation de l'organe ou de la partie de l'organe observée entre les deux images à partir des positions d'un ensemble de points de marquage sur les deux images, ladite expression mathématique étant au moins déterminée pour les points de la structure linéique. Dans la mise en oeuvre particulière représentée sur la figure 5, le procédé décrit dans la figure 1 pour deux images successives ou non est itéré sur l'ensemble des images successives IM($t_i$) de la séquence d'image SIM. Comme la structure linéique est définie sur une image IM($t_j$) de la séquence qui est le plus souvent différente de IM($t_0$), le traitement des images ne peut être fait à partir de $t_0$ directement. Il est nécessaire de réordonner la séquence SIM de manière à commencer à traiter l'image où est définie la structure linéique en premier quitte à ensuite rétablir l'ordre d'origine pour la présentation des résultats. Les déformations peuvent en effet être calculées entre deux images quelconques. L'utilisation d'une mémoire MEM permet aussi de stocker les expressions des déformations pour ensuite les réutiliser. Par exemple, il est possible de combiner entre elles les expressions des déformations d'images successives pour trouver la déformation entre deux images non successives. Après une initialisation pour un compteur initialisé à i=0, l'image IM($t_j$=$t_0$) est extraite de la séquence SIM. Les positions des points de marquage MP($t_j$=$t_0$) sont calculées et stockées dans la mémoire MEM, le processus décrit ci-après est amorcé avec i=1. Cette initialisation n'est pas explicitement représentée sur la figure car elle est le cas particulier du schéma général où i=0, où f est fonction nulle et MP($t_{i-1}$)=MP($t_j$=$t_0$). Une image IM($t_i$) est extraite de la séquence d'images SIM a priori réordonnée. Les positions des points de marquage MP($t_i$) sont calculés par des moyens de calcul CALC. Ces positions sont stockées dans une mémoire MEM et sont fournies à des moyens de détermination DET d'une expression mathématique de la déformation. Les positions d'un ensemble de points de marquage MP'($t_{i-1}$) de l'image précédente IM($t_{i-1}$) sont extraits de la mémoire MEM et fournis aux moyens DET pour la détermination de l'expression de la déformation f($t_{i-1}$ ; $t_i$). Dans la mise en oeuvre représentée sur la figure 5, l'expression mathématique de la déformation est ensuite stockée dans la mémoire MEM et le compteur est incrémenté à i=i+1. La déformation f($t_{i-1}$; $t_i$) est utilisée avec LS($t_{i-1}$) dans des moyens d'application AP de l'expression mathématique de la déformation à LS($t_{i-1}$) pour déterminer LS($t_i$) qui est stockée dans la mémoire MEM et peut être représentée sur l'image IM($t_i$).

La figure 6 illustre un dernier perfectionnement du suivi de la déformation d'une structure linéique définie sur une image incluant des points de marquage. Dans une mise en oeuvre avantageuse, les mouvements globaux de la structure linéique sont en effet calculés puis extraits de l'expression appliquée à la structure linéique. La figure 6 représente la déformation de la structure linéique en représentant deux structures linéiques : une première structure LS(t1) correspondant à la structure sur une image donnée et une deuxième structure LS(t2) qui a subi la déformation de l'organe entre les instants t1 et t2. Le déplacement spécifique de douze points est représenté par des lignes, telle la ligne L reliant les points correspondants d'une structure à l'autre. Sur la figure 6a, aucune correction n'est effectuée, sur la figure 6b, est appliquée une correction de la translation globale de la structure linéique, sur la figure 6c, est appliquée en plus de la correction de translation, une correction de la rotation globale, sur la figure 6d, est appliquée en plus une correction de contraction. La figure résultante donne des informations sur la déformation locale particulière de l'organe, ce sont ces Informations qui permettent de détecter d'éventuelles anomalies dans le comportement de l'organe.

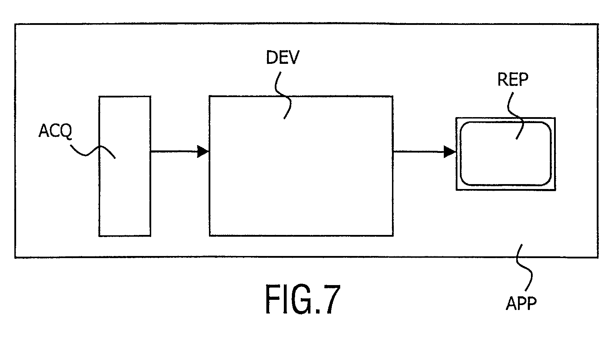

La figure 7 représente un appareil APP de saisie d'images, ledit appareil comprenant des moyens ACQ d'acquisition de séquences d'au moins deux images d'un organe ou d'une partie d'un organe amené à se déformer dans le temps, ledit organe ou ladite partie de l'organe étant visible sur les images sous la forme d'une surface appelée surface de l'organe, ladite surface incluant des points caractéristiques dont les correspondances sont déterminées d'une image à une autre de la séquence, des moyens REP de représentation visuelle de ces images, qui peut comprendre un mode vidéo pour suivre la déformation au cours de la séquence, un appareillage DEV de traitement d'images tel que décrit auparavant. Les modules présentés auparavant pour réaliser les fonctions présentées dans les étapes du procédé selon l'invention peuvent être intégrés en tant qu'application additionnelle dans un appareil médical classique de résonance magnétique ou être mis en oeuvre dans un appareil indépendant destiné à être relié à un appareil médical classique d'acquisition d'images en résonance magnétique pour réaliser les fonctions selon l'invention. Il existe de nombreuses façons de mettre en oeuvre les fonctions présentées dans les étapes des procédés selon l'invention par des moyens logiciels et/ou matériels accessibles à l'homme du métier. C'est pourquoi les figures sont schématiques.

Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permette de réaliser une fonction. Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention. Ainsi, de nombreuses modifications peuvent être réalisées par un homme du métier sans pour autant s'exclure de l'esprit et de la portée définies par les revendications suivantes.

## Revendications

1. Procédé de traitement d'images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence, ledit procédé comprenant'des étapes de :

   définition d'une structure linéique sur une des images de la séquence,
   calcul des positions des points de marquage sur au moins deux images, successives ou non,
   détermination des paramètres d'une expression mathématique explicite de la déformation de l'organe ou de la partie de l'organe observée entre les deux images, à partir des positions d'un ensemble de points de marquage sur les deux images et des positions des points de la structure linéique,
   application de ladite expression mathématique explicite à la structure linéique pour définir la forme de la structure linéique après déformation de l'organe entre les deux images.

2. Procédé de traitement d'images selon la revendication 1, **caractérisé en ce que** ledit organe est marqué par modulation spatiale de résonance magnétique, ledit marquage étant visible sur les images sous la forme de lignes de marquage, lesdites lignes de marquage se déformant en suivant la déformation de l'organe et étant telles qu'il existe des points d intersection entre lesdites lignes de marquage, lesdits points d'intersection étant les points de marquage.

3. Procédé de traitement d'images selon l'une des revendications 1 ou 2, **caractérisé en ce que** la structure linéique définit une segmentation de l'image, ladite segmentation étant ainsi suivie d'une image à l'autre.

4. Procédé de traitement d'images selon l'une des revendications 1 à 3, **caractérisé en ce que** l'expression mathématique de la déformation de l'organe ou de la partie de l'organe observée entre les deux images est déterminée pour une surface incluant la structure linéique à partir des positions sur les deux images d'un ensemble de points de marquage, ledit ensemble de points de marquage contenant au moins les points de marquage présents sur ladite surface.

5. Procédé de traitement d'images selon l'une des revendications 1 à 3, **caractérisé en ce que** l'expression mathématique de la déformation de l'organe ou de la partie de l'organe observée entre les deux images est déterminée uniquement pour les points de la structure linéique à partir des positions sur les deux images d'un ensemble de points de marquage, lesdits points de marquage étant pondérés en fonction de leur éloignement par rapport à la structure linéique.

**6.** Procédé de traitement d'images selon l'une des revendications 1 à 5, incluant une étape de détermination d'un ou plusieurs mouvements globaux de la structure linéique, lesdits mouvements globaux étant extraits de l'expression mathématique de la déformation et une étape de soustraction de ces mouvements globaux à l'expression mathématique de la déformation appliquée à la structure linéique.

**7.** Appareillage de traitement d'images, ayant des moyens pour recevoir ou générer des images, lesdites images appartenant à une séquence d'au moins deux images présentant une surface représentative d'un organe ou d'une partie d'organe déformable dans le temps et appelée surface d'organe, ladite surface incluant des points caractéristiques, notés points de marquage, qui se correspondent d'une image à une autre de la séquence, ledit appareillage comprenant des moyens de :

définition d'une structure linéique sur une des images de la séquence,
calcul des positions des points de marquage sur au moins deux images, successives ou non,
détermination des paramètres d'une expression mathématique explicite de la déformation de l'organe ou de la partie de l'organe observée entre les deux images, à partir des positions d'un ensemble de points de marquage sur les deux images et des positions des points de la structure linéique,
application de ladite expression mathématique explicite à la structure linéique pour définir la forme de la structure linéique après déformation de l'organe entre les deux images.

**8.** Appareillage de traitement d'images selon la revendication 7, **caractérisé en ce que** ledit organe est marqué par modulation spatiale de résonance magnétique, ledit marquage étant visible sur les images sous la forme de lignes de marquage, lesdites lignes de marquage se déformant en suivant la déformation de l'organe et étant telles qu'il existe des points d'intersection entre lesdites lignes de marquage, lesdits points d'intersection étant les points de marquage.

**9.** Appareillage de traitement d'images selon l'une des revendications 7 et 8, pour mettre en oeuvre un procédé selon l'une des revendications 3 à 6.

**10.** Appareillage de traitement d'images selon l'une de revendications 7 à 9 comprenant des moyens pour itérer le procédé décrit pour deux images successives ou non dans la revendication 1, sur l'ensemble des images successives de la séquence d'images.

**11.** Appareillage de traitement d'images selon l'une des revendications 7 à 10, comprenant une étape de détermination d'un ou plusieurs mouvements globaux de la structure linéique, lesdits mouvements globaux étant extraits de l'expression mathématique de la déformation et une étape de soustraction de ces mouvements globaux à l'expression mathématique de la déformation appliquée à la structure linéique.

**12.** Appareillage de traitement d'images selon l'une des revendications 7 à 11 comprenant des moyens de visualisation de l'évolution des paramètres de la déformation subie par la structure linéique au cours de la séquence.

**13.** Appareillage de traitement d'images selon l'une des revendications 7 à 12, **caractérisé en ce que** ladite structure linéique est une structure linéique définie par l'utilisateur sur une des images de la séquence et **en ce que** la déformation est suivie sur l'ensemble des images de la séquence.

**14.** Appareil de saisie d'images de résonance magnétique comprenant :

des moyens d'acquisition d'images de résonance magnétique permettant d'obtenir une séquence d'images,
des moyens de présentation visuelle de ces images, et
un appareillage de traitement d'images selon l'une des revendications 7 à 13.

**15.** Produit programme d'ordinateur comprenant des portions/moyens/instructions de code de programme pour l'exécution des étapes du procédé selon l'une des revendications 1 à 5 lorsque ledit programme est exécuté sur un ordinateur.

FIG.1

FIG.2

FIG.3

FIG.4

FIG.5

FIG.6a

FIG.6b

FIG.6c

FIG.6d

DEV

REP

ACQ

FIG.7

APP

**Office européen**
**des brevets**

## RAPPORT DE RECHERCHE EUROPEENNE

Numéro de la demande

EP 02 07 5217

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 48509 A (BARNES JEWISH HOSPITAL) 24 août 2000 (2000-08-24) * page 9, ligne 27 - page 10, ligne 36 * * figures 8A,8B * ----- | 1,2,7,8 | G06T7/20 |
|   |   |   | **DOMAINES TECHNIQUES RECHERCHES (Int.Cl.7)** |
|   |   |   | G06T |

Le présent rapport a été établi pour toutes les revendications

| Lieu de la recherche | Date d'achèvement de la recherche | Examinateur |
|---|---|---|
| LA HAYE | 28 mars 2002 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 07 5217

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-03-2002

| Document brevet cité au rapport de recherche | | Date de publication | Membre(s) de la famille de brevet(s) | | Date de publication |
|---|---|---|---|---|---|
| WO 0048509 | A | 24-08-2000 | AU<br>WO | 3002500 A<br>0048509 A1 | 04-09-2000<br>24-08-2000 |

EPO FORM P0460

Pour tout renseignement concernant cette annexe : voir Journal Officiel de l'Office européen des brevets, No.12/82